# EUROPEAN PATENT SPECIFICATION

(11) **EP 2 378 170 B1**
(45) Date of publication and mention of the grant of the patent: **21.01.2015**
(21) Application number: 11380005.6
(22) Date of filing: 28.01.2011
(51) Int. Cl.: F16K 5/06, F16K 35/10, F16K 35/06, F16K 35/02

(54) **Ball valve**
Kugelhahn
Robinet à boisseau sphérique

(30) Priority: 14.04.2010 ES 201030339 U
(43) Date of publication of application: 19.10.2011
(73) Proprietor: Genebre Group, S.L., 08908 L'Hospitalet De Llobregat (Barcelona) (ES)
(72) Inventor: Paris, Josep Maria, 08908 L'Hospitalet de Llobregat (Barcelona) (ES)
(74) Representative: Morgades y Manonelles, Juan Antonio

(56) References cited:
- EP-A1- 1 074 772
- WO-A1-99/31422
- WO-A1-2004/079238
- WO-A2-2007/072534
- GB-A- 2 227 811
- US-A- 4 848 724

## Description

### OBJECT OF THE INVENTION

This invention refers, as indicated in the heading, to a ball valve.

### FIELD OF THE INVENTION

This valve has a tubular body with a spherical valve, hence its name, which is operated by rotating from the outside and it is diametrically open so as to enable, when correctly oriented, the passage of fluid through the body, the valve being designed principally for water supplies and services.

### BACKGROUND OF THE INVENTION

Known valves of this type use a lever or pneumatic actuator fitted to the rotating shaft, which projects by a radial neck from the tubular body for closing, which is attached to the valve and, even if this lever or actuator is removed after the action, it is unavoidable to have the rotating shaft visible so that an unscrupulous person could manipulate it with suitable tools, opening or the closing valve and causing the corresponding disturbance and/or problems.

WO2007/072534 discloses a ball valve, with a tubular body and a spherical valve inside diametrically open to enable the passage of fluid when the valve is positioned in a certain manner from the outside by acting on a rotating shaft that projects from the radial neck of the aforementioned body and that is attached to said valve, wherein it comprises a cap covering the part of the shaft projecting from the tubular body and which has inside means to engage to the shaft and turn it and also means to secure it on the shaft that can be manipulated from outside using a key that accesses it through an opening at the top of the cap, the neck of the tubular body having a stop that limits and stops the cap turning, and with it the valve shaft.

### SUMMARY OF THE INVENTION

These drawbacks or problems, and others that are derived from them, can be solved with the valve described in this invention, which has a cap covering the part of the shaft projecting from the tubular body and which has inside means to engage to the shaft and turn it and also means to secure it on the shaft that can be manipulated from outside using a key that accesses it through an opening at the top of the cap, the neck of the tubular body having a stop that limits or stops the cap turning, and with it the valve shaft, impeding its manipulation by unauthorised personnel.

The indicated means to engage the cap to the rotating shaft comprise a tubular non-rotating bush, which is attached radially on the inside of the cap and retained inside the same, it is attached, also in a non-rotating fashion, onto the shaft.

The cap is secured onto the rotating shaft with a screw with a discoidal head that freely rotates around the contour of the head in an intermediate ring-shaped recess inside the cap, threading into an axial threaded hole in the rotating shaft, on the head, a projection of the right shape for the coupling of the key for operating the valve, the mentioned recess being determined by a gap between a ring-shaped step and the tubular bush.

The cap also has, on opposite sides of its outer surface, two butterfly-type wings for operation and, on the inner contour of its mouth, at least one notch into which the stop (which is a projection on the outside of the neck) on the neck of the tubular body can enter.

To operate the valve, the cap must be sufficiently detached from the tubular body for it to be able to turn without being detained by the stop, to achieve this, there will be a key acting on the inner screw to unthread it sufficiently from the rotating shaft until this is possible.

Once the desired position of the valve has been achieved by rotating the cap sufficiently, the screw will be turned in the opposite direction to bring the cap closer to the tubular body and the stop on its neck will enter the notch on the inside of the cap, locking the position, repeating the operations to unlock it and to set the valve in a different position.

To make the manipulation of the valve by unauthorised personnel even more difficult, the cap may be longer and have the space between the screw and the rear of said cap divided into at least two chambers by an intermediate transversal divider with an opening of the same shape as that of the top, but in a different position respect to it.

This divider may be composed by the top of a cup fitted axially on the inside of the cap between a ring-shaped step of the cap and the head of the screw, with the mouth of the cup resting on this head.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figure 1 is an exploded perspective view of the valve in question,
Figure 2 illustrates a section elevation view of the valve assembled,
Figure 3 shows a partially sectioned elevation plan of the cap on the neck of the body of the valve in locked position,
Figure 4 shows another partially sectioned elevation plan of the cap on the neck of the body of the valve in unlocked position, and
Figure 5 is a bottom plan view of the cap.

### DETAILED DESCRIPTION

According to the drawings, the valve illustrated has a tubular body (1) formed by two parts threaded together and with a radial neck (2) from which the rotating shaft projects (3) which is attached on one end to a spherical valve (4) located inside the body (1) and on the opposite end it is attached to the cap (5) placed over the part of the shaft that projects from the neck (2), covering it.

This cap has three interior areas (6, 7, 8) of different diameter, from larger to smaller, from the mouth up to the top, with a tubular bush (9) axially attached to the intermediate area (7), which at one end is at a certain distance from the ring-shaped step (10) that this area forms with the next area (8) determining a ring-shaped recess (11) and, on the other side it is retained by a circlip (12) fitting into the ring-shaped groove (13) of the cap (5).

The bush (9) is attached in a non-rotating fashion to the area (7), this is achieved by the bush having longitudinally several ribs (9') on its exterior surface that fit into corresponding slots (7') in this area (see figure: 5), this surface area can also be prismatically shaped.

In the indicated recess (11) of the cap (5) is a screw (14), supported by the shape of its discoidal head (14'), by which the cap is secured in a rigid fashion onto the shaft (3) that projects from the neck (2) of the body (1).

For this purpose, the bush (9) is attached in a non-moving manner by its inner surface onto the shaft, either by its prismatic shape or with projections (3') on one part that enter into slots (9'a) in the other, and the screw (14) threads into an axial threaded hole (3a) in the shaft (3) and can be operated using a Key (M) that is inserted into an opening (15) on the top of the cap (5) which fits onto a projection (14'a) on the head of the screw.

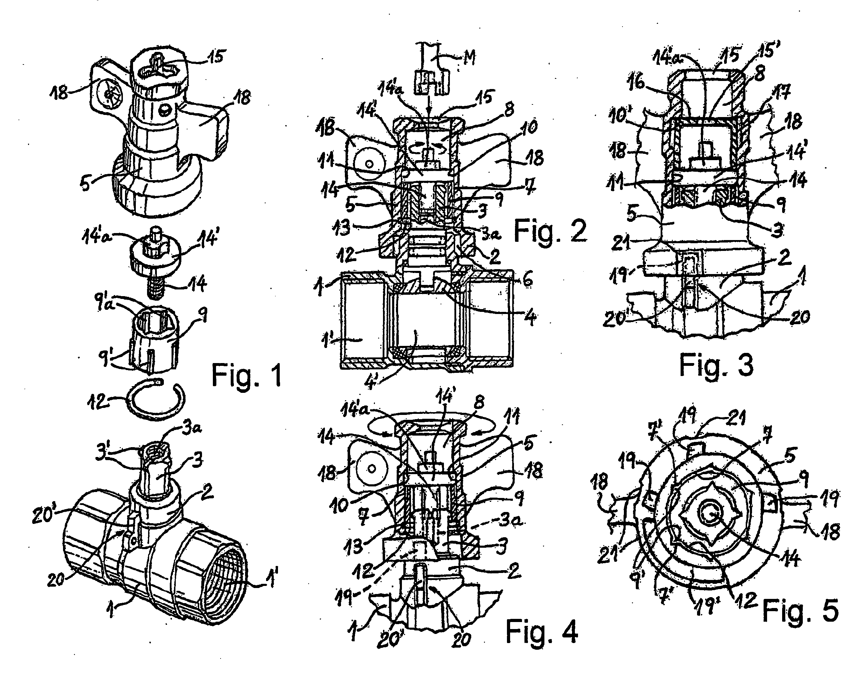

The cap (5) may be longer (figure 3) to enable it to be divided into two inside chambers (8) by means of a transversal divider (16) that will have an opening (15') of the same shape as the opening (15) on the top of the cap (5) but in a different position, the area (8) may also be even longer and have more divisions.

The partition (16), in the example is made by the end of a cup (17) fitted to the area (8) between a ring-shaped step (10') and the head (14') of the screw (14), on which the cup (17) rests, by its mouth (figure 3).

Without threading the screw (14) completely into the shaft (3), when turning the cap (5) using the two opposing lugs (18), this will also turn the shaft (3) and, with it, the spherical valve (4), and this will locate the sphere (4') aligned or not with the passage (1') of the body (1) to allow the corresponding fluid to pass or not.

To lock the cap (5) and with it the position of the valve (4), it will be sufficient to continue turning the screw (14) with the key (M), thus making the cap (5) move towards the body (1) until the notch (19) on the inside of its mouth, enters the stop (20) which is a projection (20') on the outside surface of the neck (2).

The mouth of the cap (5) has several notches (19), to leave the valve open, closed or semi-open, and also a notch (19') that enables all the options, but with a delimited travel. On its outside, the cap (5) has, beside the edge of its mouth, some grooves (21), or other marks, corresponding to the notches (19, 19') to identify each position.

In this manner, it will be difficult for an unauthorised person to manipulate the valve, it is also possible for the screw thread (14) in the shaft (3) to be left-hand, i.e. opposite to the customary direction, to make unauthorised manipulation even more difficult.

To unlock the valve, it will be sufficient to repeat the above operations in reverse order. The cap (5) may also have a spring inside (not illustrated) to facilitate the upward movement of the cap when releasing the screw (14) from the shaft (3).

The invention can within its essentiality be put into practice in other embodiments differing only in detail from the one having been described above only by way of example.

This ball valve may thus be manufactured in any shape and size, with the most suitable means and materials and with the most convenient accessories, and the components may be replaced by others that are technically equivalent.

## Claims

1. Ball valve, with a tubular body (1) and a spherical valve inside (4) diametrically open to enable the passage of fluid when the valve (4) is positioned in a certain manner from the outside by acting on a rotating shaft (3) that projects from the radial neck (2) of the aforementioned body and that is attached to said valve, wherein it comprises a cap (5) covering the part of the shaft (3) projecting from the tubular body and which has inside means to engage to the shaft and turn it, comprise a tubular non-rotating bush (9) which is attached radially on the inside of the cap and retained inside the same, it is attached, also in a non-rotating fashion, onto the shaft (3), and also means to secure it on the shaft that can be manipulated from outside using a key (M) that accesses it through an opening (15) at the top of the cap (5), said means to secure comprising a screw (14) with a discoidal head (14') that freely rotates around the contour of the head in an intermediate ring-shaped recess (11) inside the cap (5), threading into an axial threaded hole (3a) in the shaft (3),
wherein the cap has three interior areas (6, 7, 8) of different diameter, from larger to smaller, from the mouth up to the top, with the tubular bush (9) axially attached to the intermediate area (7), which at one end is at a certain distance from the ring-shaped step (10) that this area forms with the next area (8) determining a ring-shaped recess (11) and, on the other side it is retained by a circlip (12) fitting into the ring-shaped groove (13) of the cap (5), and
the neck (2) of the tubular body (1) having a stop (20) that limits or stops the cap (5) turning, and with it the valve shaft (4).

2. Ball valve, according to claim 1, wherein the bush (9) is attached in a non-rotating fashion to the area (7), this is achieved by the bush having longitudinally several ribs (9') on its exterior surface that fit into corresponding slots (7') in this area (7).

3. Ball valve, according to claim 1, **characterised in that** the screw (14) has , on the head (14'), a projection (14'a) of the right shape for the coupling of the key (M).

4. Ball valve, according to claim 1, **characterised in that** the cap (5) has two opposite wings (18) on its outer surface.

5. Ball valve, according to claim 1, **characterised in that** the cap (5) has several notches (19, 19') on the inside of its mouth and into these notches a stop (20) on the neck (2) can enter, this stop is an exterior projection (20') of the neck.

6. Ball valve, according to claim 1, **characterised in that** the cap (5) has inside, between the top of the cap and the head (14') of the screw (14), at least one intermediate transversal divider (16) with an opening (15') of the same shape as the opening (15) of the cap top, but in a different position.

7. Ball valve, according to claim 1, **characterised in that** the bush (9) is attached in a non-moving manner by its inner surface onto the shaft (3), either by its prismatic shape or with projections (3') on one part that enter into slots (9'a) in the other.

## Patentansprüche

1. Kugelventil mit einem rohrförmigen Körper (1) und einem kugelförmigen Ventil (4) im Inneren, das diametral öffnet um den Durchgang einer Flüssigkeit zu ermöglichen, wenn das Ventil (4) von außen durch Betätigung eines aus dem radialen Hals (2) des genannten Körpers hervorstehenden Drehschaftes (3), der an diesem Ventil befestigt ist, in eine bestimmte Stellung gebracht wird, wobei das Ventil eine Kappe (5) aufweist, die den aus dem rohrförmigen Körper vorstehenden Teil des Schaftes (3) umhüllt und im Inneren Mittel aufweist um am Drehschaft anzugreifen und seine Drehung zu bewirken, bestehend aus einer nicht drehenden rohrförmigen Buchse (9), die auf der Innenseite der Kappe radial angebracht ist und in derselben festgehalten wird, und in der gleichen nicht drehenden Weise auf dem Schaft (3) angebracht ist, sowie Mittel zu deren Fixierung auf dem Schaft aufweist, welche von außen mit einem Schlüssel (M) betätigt werden können, der durch eine Öffnung (15) an der Spitze der Kappe (5) eingeführt wird, wobei die besagten Fixiermittel aus einer Schraube (14) mit einem scheibenförmigen Kopf (14') bestehen, der in einer dazwischenliegenden, ringförmigen Ausnehmung (11) innerhalb der Kappe (5) frei um den Umriss des Kopfes dreht, und die Schraube in eine axiale Gewindebohrung (3a) des Schaftes (3) eindreht,
wobei die Kappe drei Innenbereiche (6, 7, 8) mit unterschiedlichem Durchmesser aufweist, vom größten an der Mündung bis zum kleinsten an der Spitze und die rohrförmige Buchse (9) im mittleren Bereich (7) axial befestigt ist, so dass sich deren eines Ende in einer gewissen Entfernung von der ringförmigen Stufe (10) befindet, die dieser Bereich mit dem anschließenden Bereich (8) unter Ausbildung einer ringförmigen Ausnehmung (11) bildet und deren anderes Ende durch einen in der ringförmigen Auskehlung (13) der Kappe (5) eingesetzten Sicherungsring (12) festgehalten wird, und der Hals (2) des rohrförmigen Körpers (1) einen Anschlag (20) aufweist, der die Drehung der Kappe (5) und damit die des Ventilschaftes (4) begrenzt oder stoppt (4).

2. Kugelventil nach Anspruch 1, bei dem die Buchse (9) im Bereich (7) nicht drehend befestigt ist, was dadurch erreicht wird, dass die Buchse auf ihrer Außenfläche mehrere Längsrippen (9') aufweist, die in entsprechende Rillen (7') in diesem Bereich (7) eingreifen.

3. Kugelventil nach Anspruch 1, **dadurch gekennzeichnet, dass** die Schraube (14) auf dem Kopf (14') einen Vorsprung (14'a) aufweist, der die richtige Form hat, damit der Schlüssel (M) daran angreifen kann (M).

4. Kugelventil nach Anspruch 1, **dadurch gekennzeichnet, dass** die Kappe (5) auf ihrer Außenfläche zwei gegenüberliegende Flügel (18) aufweist.

5. Kugelgelenk nach Anspruch 1, **dadurch gekennzeichnet, dass** die Kappe (5) im Inneren der Mündung mehrere Rillen (19, 19') aufweist und in diese Rillen ein Anschlag (20), der von einem äußeren Vorsprung (20') des Halses (2) gebildet wird, eingreifen kann.

6. Kugelgelenk nach Anspruch 1, **dadurch gekennzeichnet, dass** die Kappe (5) in ihrem Inneren zwischen der Spitze der Kappe und dem Kopf (14') der Schraube (14), wenigstens einen dazwischenliegenden Querteiler (16) mit einer Öffnung (15') mit der gleichen Form wie die Öffnung (15) an der Spitze der Kappe aber in einer anderen Lage aufweist.

7. Kugelgelenk nach Anspruch 1, **dadurch gekennzeichnet, dass** die Buchse (9) mit ihrer Innenfläche in nicht verschiebbarer Weise auf dem Schaft (3) befestigt ist, entweder durch ihre prismatische Form oder durch Vorsprünge (3') auf einem Teil, die in entsprechende Rillen (9'a) am anderen Teil eingreifen.

## Revendications

1. Robinet à bille, avec un corps tubulaire (1) et une soupape sphérique à l'intérieur (4) diamétralement ouverte pour permettre le passage de fluide lorsque le robinet (4) est positionnée d'une certaine manière dés l'extérieur en agissant sur un arbre rotatif (3) qui fait saillie à partir du col (2) radiale du corps précité et qui est fixé au robinet mentionné, le robinet ayant un capuchon (5) qui recouvre la partie de l'arbre (3) faisant saillie du corps tubulaire et qui comporte des moyens à l'intérieur à s'engager à l'arbre pour le forcer en rotation, comprennent une douille tubulaire non rotative (9) qui est fixée radialement à l'intérieur de du capuchon et retenue à l'intérieur du même, le capuchon étant fixé, également d'une manière non rotative, sur l'arbre (3), ayant des moyens pour le fixer sur l'arbre qui peuvent être manipulés dés l'extérieur à l'aide d'une clé (M) qui permet d'accéder à travers une ouverture (15) dans la partie supérieure du capuchon (5), lesdits moyens de fixation comprenant une vis (14) avec une tête en forme de disque (14') qui tourne librement autour du contour de la tête dans une cavité intermédiaire en forme d'anneau (11) à l'intérieur du capuchon (5), s'accouplant le capuchon dans un trou axial fileté (3a) de l'arbre (3),
dans lequel le capuchon comporte trois zones a l'intérieur (6, 7, 8) de diamètres différents, du plus grand au plus petit, à partir de l'embouchure jusqu'à le partie supérieure, avec le manchon tubulaire (9) fixé axialement par rapport à la zone intermédiaire (7), qui à une extrémité est à une certaine distance de l'échelonnement annulaire (10) que cette région forme avec la zone suivante (8) détermination d'un évidement annulaire (11) et, de l'autre côté il est retenu par un circlip (12) accouple dans la rainure (13) de forme annulaire du capuchon (5), et
le col (2) du corps tubulaire (1) comportant une butée (20) qui limite ou arrête la rotation du capuchon (5) ainsi que la tige (4) du robinet (4).

2. Robinet à bille, selon la revendication 1, dans lequel la douille (9) est fixée de manière non rotative à la zone (7), ce qui est réalisé par le manchon ayant plusieurs nervures longitudinalement (9') sur sa surface extérieure que s'insèrent dans les fentes correspondantes (7') de cette zone (7).

3. Robinet à bille, selon la revendication 1, **caractérisé en ce que** la vis (14) présente sur la tête (14 '), une saillie (14'a) de la forme adéquate pour l'accouplement de la clé (M).

4. Robinet à bille, selon la revendication 1, **caractérisé en ce que** le capuchon (5) comporte deux ailes opposées (18) sur sa surface extérieure.

5. Robinet à bille, selon la revendication 1, **caractérisé en ce que** le capuchon (5) a plusieurs encoches (19, 19') à l'intérieur de sa embouchure et dans ces encoches une butée (20) du col (2) peut entrer, cette butée étant formée par une saillie extérieure (20') du col.

6. Robinet à bille, selon la revendication 1, **caractérisé en ce que** le capuchon (5) présente à l'intérieur, entre la partie supérieure du capuchon et la tête (14') de la vis (14), au moins une cloison transversale intermédiaire (16) avec une ouverture (15') de la même forme que l'ouverture (15) de la partie supérieure du bouchon, mais dans une position différente.

7. Robinet à bille, selon la revendication 1, **caractérisé en ce que** la douille (9) est fixée d'une manière non-mobile par sa face interne sur l'arbre (3), soit par sa forme prismatique ou moyennant des saillies (3') sur une partie qui pénètre dans les fentes (9'a) de l'autre.
